# EUROPEAN PATENT SPECIFICATION

(11) **EP 2 612 559 B1**
(45) Date of publication and mention of the grant of the patent: **03.04.2019**
(21) Application number: 10856740.5
(22) Date of filing: 08.10.2010
(51) Int. Cl.: A23L 7/113, A23L 3/40

(54) **INSTANT DRIED NOODLES AND PROCESS FOR PRODUCING THE SAME**
INSTANT-TROCKENNUDELN UND VERFAHREN ZU IHRER HERSTELLUNG
NOUILLES DÉSHYDRATÉES INSTANTANÉES ET LEUR PROCÉDÉ DE FABRICATION

(30) Priority: 03.09.2010 JP 2010197711
(43) Date of publication of application: 10.07.2013
(73) Proprietor: Sanyo Foods Co., Ltd., Minato-ku, Tokyo 107-0052 (JP)
(72) Inventor: NAGAYAMA, Yoshiaki, Maebashi-shi Gunma 371-0811 (JP)
(74) Representative: Thurston, Joanna
(86) International application number: PCT/JP2010/068217
(87) International publication number: WO 2012/029195

(56) References cited:
- WO-A1-2010/101268
- WO-A1-2010/101268
- JP-A- 9 294 553
- JP-A- 59 063 152
- JP-A- 2002 253 152
- JP-A- 2006 122 020
- JP-A- 2006 288 239
- US-A- 4 590 083
- DATABASE WPI Week 2006 Thomson Scientific, London, GB; AN 2006-343917 XP002722934, & JP 2006 122020 A 18 May 2006 (2006-05-18)
- DATABASE WPI Week 2006 Thomson Scientific, London, GB; AN 2006-736752 XP002722935, & JP 2006 288239 A 26 October 2006 (2006-10-26)
- DATABASE WPI Week 200766 Thomson Scientific, London, GB; AN 2007-704778 XP002722936, & JP 2007 222139 A (MIYOSHI YUSHI KK) 6 September 2007 (2007-09-06)
- DATABASE WPI Week 200025 Thomson Scientific, London, GB; AN 2000-292969 XP002722937, & WO 00/18255 A1 (FUJI OIL CO LTD) 6 April 2000 (2000-04-06)
- DATABASE WPI Week 200333 Thomson Scientific, London, GB; AN 2003-345462 XP002722938, & JP 2002 253152 A 10 September 2002 (2002-09-10)

## Description

### TECHNICAL FIELD

The present invention relates to a method for producing instant dried noodles using hot air.

More particularly, the present invention relates to a method for producing instant dried noodles (pasta), capable of making an instant dried pasta extremely excellent in taste, texture and unfastening using as a main raw material, substantially 100% of durum wheat flour, which has not been achieved by the prior art, by applying pressure to dough, which is obtained by using durum wheat flour as a main raw material and further adding solid fat or oil to a raw noodle material followed by forming small mass or plate of dough in a noodle-making step by a conventional method, under reduced pressure thereby so as to make a noodle strip.

### BACKGROUND ART

Regarding instant noodles, a "genuine-article"-oriented consumer becomes a trend nowadays in daily life. For example, regarding instant Chinese noodles, particularly snack noodles which is non-fried, dried noodles, i.e. non-fried cup noodles (Chinese noodles), it is desired to have "viscoelasticity like that of non-dried noodles" and to realize "fresh texture like that of non-dried noodles". From the viewpoint of replying these requirements, each company competes ruthlessly for technical innovation of non-fried cup noodles (Chinese noodles).

Conventionally, in case of pasta, a dense structure can be imparted to noodle strips by using durum wheat flour as a main raw material and extruding the noodle strip through an extruder by directly applying a pressure, and thus realizing stiffness with density feel specific to the pasta.

There are following problems so as to realize the aforementioned pasta in the instant noodles.
(1) When durum wheat flour is used, restoration with hot water is poor.
   This is because a crude protein value is as far high as about 13% when compared with conventional wheat flour used in instant noodles.
(2) It is necessary to increase a density of noodle strip using an extruder or the like for forming the noodle strip.
(3) When the aforementioned improvements (1) and (2) are simultaneously carried out, restoration with hot water tends to become worse.
(4) When noodle strip is directly extruded through an extruder, efficiency is too poor to carry out mass production.
(5) Since pasta is usually of straight-shaped noodle strip, when noodle strip is waved, the obtained waved noodle strip has a sense of incongruity in appearance (usually, regarding instant noodles, when noodle strip is not waved, unfastening at the time of eating is poor and thus a commercial value tends to be lost).

All of Patent Documents 1, 2 and 3 disclose a drying method using a freeze-drying process. Patent Documents 1 and 2 disclose a method in which the interior of noodle strip is porously dried at the time of freeze-drying by supplying much moisture to a paste in a pre-step of freeze-drying, resulting in satisfactory restoration with hot water. Patent Document 3 discloses a method in which restoration with hot water is improved by decreasing the strength of noodle strip using amylase. According to these methods, it is possible to improve restoration with hot water by surely performing the aforementioned treatment followed by freeze-drying. However, a freeze-drying method has drawbacks such as a long treatment time and high costs. Furthermore, according to the freeze-drying method, since the pasta obtained after drying shows a pure white color tone, the color tone is quite different from that of a dried pasta imaged by a consumer in a dry state, and the pasta has a severe sense of incongruity in appearance. Patent Document 4 discloses a method in which instant dried pasta is made by hot-air drying. However, in this method, the thickness of the obtained noodle strip is limited and also the instant dried pasta cannot be made from a durum flour only in a main raw material, and thus there is a tendency that it is hard to say that the obtained pasta may be a genuine instant pasta.

Patent Document 5 describes noodles which have been obtained by hot air drying prepared through gelatinizing process.

Patent Document 6 describes hot air dried noodles, the noodles of this document having reduced tendency to crack.

Patent Document 7 describes resconstitutable noodles which are steam heated during the production process.

Patent Document 8 also describes a method for producing instant noodles involving steaming wherein the noodles are similar to conventional boiled noodles.

Patent Document 9 describes a powdered oil/fat for use in instant noodles in which an organic fatty acid ester of glycerin and lecithin is used.

Patent Document 10 describes a process for producing noodles in which the powdered fat has defined melting point (45-75°C) and is used at a ratio of 0.1 to 10% by weight relative to the cereal flour and optionally starched.

Patent Document 11 describes instant noodles which do not stick together which are made by de-gassing the noodle dough, forming ribbons and steaming, cutting, predrying and then fully drying the noodle mass.

### Prior Art Documents

### Patent Documents

Patent Document 1: Japanese Unexamined Patent Publication No. 2007-330162
Patent Document 2: Japanese Unexamined Patent Publication No. 08-163962
Patent Document 3: Japanese Unexamined Patent Publication No. 05-328926
Patent Document 4: Japanese Unexamined Patent Publication No. 08-038085
Patent Document 5: International Patent Publication No. WO 2010/101268
Patent Document 6: Japanese Patent Publication No. 2006 122020
Patent Document 7: US Patent Application No. 4,590,084
Patent Document 8: Japanese Patent Publication No. JP 2006 288239
Patent Document 9: Japanese Patent Publication No. JP 2007 222139
Patent Document 10: International Patent Publication No. WO 00/18255
Patent Document 11: Japanese Patent Publication No. JP 2002 253152

### SUMMARY OF THE INVENTION

### Problems to be Solved by the Invention

An object of the present invention is to provide a method for producing instant noodles which can solve the aforementioned problems of the prior art.

### Means for Solving the Problems

The present inventors have intensively studied and found that a plurality of cavities can be formed in the interior of noodle strip by producing noodle strip using a vacuum noodle sheet machine while adding a powdered/granular fat or oil to a portion of a raw material.

As a result of further study based on the aforementioned novel finding, the present inventors have found that it is possible to sufficiently solve problems of the prior art in taste and texture and also to remarkably improve unfastening of noodle strip based on the presence of "a plurality of cavities in the interior of noodle strip" obtained mentioned above. That is, the present inventors have found that it is possible to sufficiently solve problems of the prior art in taste and texture while imparting density to the noodle strip and also to remarkably improve unfastening of the noodle strip, by controlling "a plurality of cavities in the interior of noodle strip" while using durum wheat flour as a main raw material, using a vacuum noodle sheet machine.

The present invention provides instant dried noodles produced by extrusion molding of dough prepared from a raw noodle material containing at least durum wheat flour and solid fat or oil, as defined in claim 1, wherein a "unfastening time" of the instant dried noodle in hot water is 10 seconds or less.

The method for producing instant dried noodles, which comprises: applying a pressure to dough prepared from a main raw noodle material and solid fat or oil under reduced pressure using an extrusion moulding machine thereby forming into a small mass or a plate shape of the dough; making noodle strips from the small mass or plate; allowing an aqueous solution to adhere onto the noodle strips before a steaming step; gelatinizing the noodle strip using steam from a steamer; and then drying the noodle strip with hot air; wherein a main raw material of the instant noodle is 100% durum wheat flour for pasta; and the instant dried noodle is restored by adding hot water.

The reason why the aforementioned effects are obtained in the present invention with the aforementioned constitution is estimated as follows according to the finding of the present inventors.

That is, according to the finding of the present inventors, by using a vacuum noodle sheet machine and using durum wheat flour as a main raw material, and also adding powdered/granular fat or oil to a raw noodle material, the powdered/granular fat or oil in the interior of a noodle strip is dissolved in a gelatinization step, and thus fine pores can be formed in the interior of the noodle strip and formed on a surface of the noodle strip. In this case, it is estimated that it becomes possible to dry by controlling the density of the noodle strip without breaking a dense structure peculiar to a vacuum noodle sheet machine.

As mentioned above, the following estimation is made in the present invention: since "the density of the noodle strip can be controlled without breaking a dense structure specific to a vacuum noodle sheet machine", hot water can quickly penetrates into the interior of a noodle strip at the time of restoration with hot water, thereby making it possible to solve "poor restoration with hot water" as a problem of the prior art while reproducing the density of the noodle strip, while reproducing stiffness with density feel and springiness specific to the pasta, even in instant pasta using durum wheat flour as a main raw material.

It is estimated that, according to these synergistic effects in the present invention, it is possible to extract a feature of a vacuum noodle sheet machine to the maximum and to obtain "satisfactory restoration with hot water" and "food texture with springiness specific to a pasta", and also it becomes possible to obtain a noodle strip capable of remarkably improving "unfastening of noodle strip" by a synergistic effect of a dense structure specific to a vacuum noodle sheet machine and an original mold release effect of powdered/granular fat or oil. Furthermore, since durum wheat flour is a high-protein wheat, the durum wheat per se is free from stickiness and has a property of being easily unfastened, and thus noodle strip (pasta) having satisfactory unfastening can be obtained even in the case of forming into a generally straight noodle strip with less wave.

### Effects of the Invention

As mentioned above, it is possible to provide a method for producing instant pasta capable of replying to the requirements of a genuine-article-oriented consumer nowadays.

Acceding to the present invention, in addition to the aforementioned effect, the following effects can also be obtained.
(1) While remaining a feature of a vacuum noodle sheet machine in noodle strip using durum wheat flour as a main raw material, problems in the prior art are solved. That is, while reproducing noodle strip having density specific to a pasta, "poor restoration with hot water" and "too strong stiffness" can be solved.
(2) "Unfastening of noodle strip" of a noodle mass after a gelatinization step and that at the time of eating can be remarkably improved.
(3) Since "unfastening of noodle strip" of a noodle mass after a gelatinization step and that at the time of eating can be remarkably improved, it is possible to obtain a generally linear noodle strip with less wave, specific to pasta, even in a mass production line.

### BRIEF DESCRIPTION OF THE DRAWINGS

Fig. 1 is a graph showing the measurement results of a cut strength of various dried noodles of Test Example 1.
Fig. 2 is a schematic sectional view showing a "unfastening time" measuring device system used in Test Example 2.

### MODE FOR CARRYING OUT THE INVENTION

The present invention will be more specifically described with reference to the accompanying drawing, if necessary. In the following description, "parts" and "percentages", which represent a quantitative ratio, are by weight unless otherwise specified.

### (Instant Noodles)

The instant noodles are characterized by instant dried noodles made from a raw noodle material containing at least 100% durum wheat flour used as a main raw material and solid fat or oil, wherein a "unfastening time" of the instant dried noodles in hot water is 10 seconds or less.

Such instant noodles are suitably obtained by applying a pressure to dough, which is made from a raw noodle material containing durum wheat flour used as a main raw material and solid fat or oil, under reduced pressure using an extrusion moulding machine thereby forming into a small mass or a plate shape of the dough; making noodle strips from the small mass or plate; allowing an aqueous solution to adhere onto the noodle strips before a steaming step; gelatinizing noodle strip using steam from a steamer; and then drying the relevant noodle strip with hot air.

The "instant dried noodles" is "instant dried pasta" using durum wheat flour as a main raw material. The "instant dried pasta" may be either a so-called stewing type, or a type of cooking by pouring hot water.

### (Suitable Physical Properties of Noodles)

The noodles may preferably have the following physical properties.

### (Unfastening Time)

"Unfastening time" measured under the conditions in the below-mentioned "Examples" of the dried noodles of the present invention may be preferably 20 seconds or less. This "unfastening time" may be more preferably 10 seconds or less, and particularly preferably 0 second or less. As used herein, the aforementioned "unfastening time" refers to the time until a noodle mass to be measured "completely falls" from a partition plate, as mentioned below. As a matter of course, in case the time until the noodle mass falls became incorrect as a result of abnormal "catching" of the noodle mass on the partition plate due to some factors, the obtained time is regarded as "error" and the measurement is carried out again.

### (Cut Strength)

"Cut strength" measured under the conditions in the below-mentioned "Examples" of the dried noodles of the present invention may be preferably from 110 to 130 g. This "cut strength" may be more preferably from 115 to 125 g.

### <Measuring Conditions of Cut Strength>

Rheometer: manufactured by FUDO KOGYO CO. under the trade name of NRM-2010-CW
Three noodle strips are placed on a plate and a cut strength is measured at a table speed of 2 cm/min using one piano wire having a diameter of 0.27 mm, and then an average is calculated.

### (Materials for Noodles)

In the present invention, there is no particular limitation on the material for noodles. That is, it is possible to use materials, which have conventionally been used in the production of instant noodles, without any particular limitation. More specifically, for example, a main raw material and an auxiliary raw material described in "New Guide to Instant Noodles" supervised by Juridical Person Convenience Foods Industry Association of Japan, pp.52-62 can be used in the present invention.

### (Main Raw Material)

Regarding the main raw material which can be used in the present invention, 100% durum wheat flour is used as a main raw material. The durum wheat is a kind of hard wheat and wheat used to produce pasta. Usually, the durum wheat may have a very high protein value (about 13%) when compared with wheat flour used in instant Chinese noodles or the like, and is a indispensable raw material so as to impart crunchy texture, springiness and stiffness specific to the pasta. The durum wheat includes two types, i.e. durum flour having a fine grain size and durum semolina having a coarse grain size, according to a conventional flour milling method, and is not particularly limited in the present invention. When stiffness and springiness specific to the pasta are required, durum semolina may be preferable.

### (Auxiliary Raw Materials)

Examples of the auxiliary raw materials, which can be used in the present invention, include phosphate, salt, thickening polysaccharides, egg, gluten and the like.

### (Fat or Oil)

The fat or oil, which can be used in the present invention, will be described below. From the viewpoint of "satisfactory restoration with hot water" and effect of "unfastening of noodle strip", this fat or oil may be preferably of spherical and/or granular shape.

### (Spherical and/or Granular)

Regarding the fat or oil used in the present invention, "spherical and granular" means that the length, width and thickness of a particle shape of the fat or oil are comparatively equivalent. From the viewpoint of the effect of "unfastening of noodle strip", the particle diameter of the fat or oil may be preferably 0.1 mm or more, and more preferably 0.15 mm or more. In the present invention, the particle diameter of the fat or oil can be suitably measured by the following method.

### Method for Measurement of Particle Diameter

Using Automated Sonic Sieving Particle Analyzer Robot Shifter RPS-85 (SEISHIN ENTERPRISE Co., Ltd.), a particle diameter was automatically measured by a sonic sieving method.

### (Specific Examples of Fat or Oil)

There is no particular limitation on the kind of the fat or oil which can be used in the present invention. That is, the fat or oil can be appropriately selected from various fats or oils, which have conventionally used in the food and instant noodles, and used (if necessary, a plurality of kinds are used in combination).

Examples of the aforementioned fat or oil include lard, palm oil, soybean oil, coconut oil, sunflower oil, cotton seed oil, corn oil, rice bran oil, rapeseed oil, sesame oil and the like. It is possible to appropriately control a melting point of each fat or oil by hydrogenation in accordance with a conventional method.

### (Method for Production of Fat or Oil)

There is no particular limitation on the method for production of fat or oil which can be used in the present invention. Examples of the usable method include a spray cooling method, a spray drying method, a drum drying method and the like. From the viewpoint of efficiency of the effects of the present invention, a spray cooling method may be more preferable. According to the spray cooling method, spherical or granular fat or oil having a particle diameter of 0.1 mm or more can be obtained comparatively easily by melting fat or oil and spraying the melted fat or oil in a cooling tower (chiller).

Since the powdered fat or oil obtained by the spray drying method has a small particle diameter (usually obtained particle diameter of about 0.03 mm), it may be slightly difficult to adjust the particle diameter to 0.1 mm or more when compared with the aforementioned spray cooling method.

According to the drum drying method, when an attempt is made to obtain those having a particle diameter (thickness) of 0.1 mm or more, the shape of the obtained powdered fat or oil tends to become comparatively large flake. Therefore, in order to form a spherical or granular fat or oil, secondary processing using a grinder such as a mill may be sometimes required, and dispersion in shape and size of the particle may arise and the yield may become worse, resulting in high production costs.

Examples of the aforementioned various powdered fats or oils include "Spray Fat PM" manufactured by Riken Vitamin Co., Ltd. for the spray cooling method. Examples thereof include "UNISHORT K" manufactured by Fuji Oil Co., Ltd. for the drum drying method.

### (Method for Production of Noodles)

According to a noodle-making method before a drying step, instant dried pasta may be preferably produced in such a manner that dough, which is prepared by kneading a raw noodle material containing at least durum wheat flour as a main raw material and spherical and/or granular fat or oil having a grain size of 0.1 mm or more with water, is formed into a small mass or a plate shape by applying a pressure in an extruder or an extrusion molding machine under reduced pressure. After composite noodle-making, noodle strip is cut out by a cutting edge, continuously gelatinized and then dried with hot air. Unfastening is further improved at the time of eating by allowing a loosing liquid or the like to adhere onto the noodle strip before to hot-air heating. As the loosing agent to be used, emulsified fat or oil or an emulsifying agent which has conventionally been used, or a soybean vegetable fiber "SOYAFIVE S" manufactured by Fuji Oil Co., Ltd. may be used.

### (Vacuum Noodle Sheet Machine)

There is no particular limitation on a device for formation of extruded noodle sheet under degassing using an extruder or the like, which can be used in the present invention. More specifically, for example, a degassing device (hereinafter referred to as a "vacuum sheet machine") in a noodle dough-making machine disclosed in Japanese Unexamined Patent Publication No. 61-132132 (Japanese Patent Application No. 59-254855) can be suitably used.

According to the specific conditions for use, cylindrical dough is extruded through dies having a diameter of 5 to 50 mm by applying a pressure in an extruder or an extrusion molding machine under degassing at vacuum degree within a range from 650 to 760 mmHg, and then the cylindrical dough is intermittently cut into a small mass having a length of 5 to 300 mm at the time of extrusion or extruded into a noodle strip, and thus a noodle strip can be obtained.

### (Gelatinization Treatment Step)

A gelatinization treatment method in the present invention is carried out by a steaming treatment using steam due to the following reason. That is, according to the boiling treatment, since the powdered/granular fat or oil added is eluted out from the interior of noodle strip, it may become comparatively difficult to obtain the space in the interior of the noodle strip. Also with respect to quality of steam used in a steaming treatment, steam having higher moisture content than that of dried steam may be preferably used so as to further improve the texture of the obtained noodle strip. By supplying a larger amount of moisture to noodle strip before steaming in a step of performing a steaming treatment (which is a conventional method of the prior art), restoration with hot water of the noodle strip can be further improved at the time of eating, and also powderiness and crumbliness of the pasta can be decreased. As used herein, "moisture to be used" may be fresh water, city water, or an aqueous solution containing an emulsifying agent, edible fat or oil or the like dissolved therein. As the emulsifying agent, for example, a glycerin fatty acid ester such as a monoglycerin fatty acid ester, a diglycerin fatty acid ester or a polyglycerin fatty acid ester may be used, and it is possible to improve unfastening of noodle strip when compared with the case of simply using fresh water. The method used to supply the aforementioned aqueous solution to the noodle strip may be a spraying method, an immersion method or the like. The amount of the aqueous solution to be sprayed may be from about 20 to 40 ml per 100 g of the noodle strip, and the moisture content may be controlled according to the state of restoration with hot water. (Reference Document: Japanese Unexamined Patent Publication No. 56-38100)

The instant dried pasta can be obtained by forming and filling each gelatinized noodle strip for one meal obtained by the aforementioned method in a drying basket and then subjecting to a hot-air drying step. Loosing at the time of eating is further improved by allowing a loosing liquid or the like to adhere onto noodle strip before hot-air drying. As the loosing agent to be used, an emulsified fat or oil or an emulsifying agent which has conventionally been used, or a soybean vegetable fiber "SOYAFIVE S" manufactured by Fuji Oil Co., Ltd. may be used.

### (Hot-Air Drying Step)

In a hot air drying method in the present invention, noodle strip is dried with hot air and may be controlled at a temperature of 60 to 110°C (more preferably 80 to 90°C), and a wind velocity of 1 to 10 m/s (more preferably 3 to 5 m/s) until a final moisture content of a noodle mass becomes 6 to 14% (preferably 8 to 10%).

When the drying temperature is lower than 80°C, a drying time tends to become longer because of poor drying efficiency. In contrast, when the drying temperature is higher than 100°C, since it exceeds a boiling point of moisture in noodle strip, it becomes difficult to perform slow drying. Accordingly, foaming of the noodle strip begins to occur and thus it tends to become difficult to obtain a dense noodle strip.

When the wind velocity at the time of drying is less than 1 m/s, it becomes difficult to satisfactorily ventilate the interior of a noodle mass and thus drying unevenness tends to arise. In contrast, when the wind velocity is more than 10 m/s, the noodle mass may be pressed against the upper portion or lower portion of a mold and thus failing to achieve a noodle mass in a sparse state and uniform drying, resulting in drying unevenness and poor unfastening of a noodle strip at the time of eating.

The present invention will be described more specifically by way of Examples.

### Examples

### Test Example 1 (Comparative)

The synergistic effect of a vacuum noodle sheet machine and kneading with powdered fat or oil was confirmed by the following tests.

### Production of Noodle Strips

### Formulation:

10 kg of durum semolina flour (protein: 14.5%), 3,400 ml of water

### Conditions before drying:

Noodle strip with a cutting edge width of 1.55 mm (round shape) and a noodle thickness of 1.6 mm was cut out as a form of generally straight noodle strip by opening a conduit, steamed at 0.5 kg/cm² for 3 minutes and then cut into steamed noodle having a noodle weight of 100 g. After spraying 20 ml of a loosing liquid (Fuji Oil Co., Ltd. "SOYAFIVE S", 1.0% aqueous solution), the steamed noodle was air-molded and filled in a mold for drying (φ120 mm) and dried at 85°C.

When a vacuum noodle sheet machine is used, the conditions are as follows. Cylindrical dough was extruded through dies having a diameter 20 mm by applying a pressure while degassing at vacuum degree of 730 mmHg and cut into a chip shape having a length of 50 mm. After composite noodle-making, in the same manner as mentioned above, noodle strip with a cutting edge width of 1.55 mm (round shape) and a noodle thickness of 1.6 mm was cut into a form of generally straight noodle strip by opening a conduit, steamed at 0.5 kg/cm² for 3 minutes and then cut into steamed noodle having a noodle weight of 100 g. After spraying 20 ml of a loosing liquid (Fuji Oil Co., Ltd. "SOYAFIBE S", 1.0% aqueous solution), the steamed noodle was air-molded and filled in a mold for drying (φ120 mm) and dried at 85°C.

When powdered fat or oil is used, the conditions are as follows. A highly hydrogenated palm oil with a melting point of 62°C and an average particle diameter of 0.1 mm was used.

Conditions of Use of Vacuum Noodle Sheet Machine and Addition of Powdered Fat or Oil:
The following three kinds of the conditions were used.

### (Three Kinds of Conditions)

(1) A vacuum noodle sheet machine is not used and powdered fat or oil is not added (final moisture: about 10%) .
(2) A vacuum noodle sheet machine is used and powdered fat or oil is not added (final moisture: about 10%) .
(3) A vacuum noodle sheet machine is used and powdered fat or oil is added (final moisture: about 10%)

### <Measurement of Moisture Content>

The moisture content was measured by the following procedure.

Electric drying machine: manufactured by Yamato Scientific Co., Ltd. under the trade name of DN-41
After drying 2 g of the obtained noodle strip by an electric drying machine at 105°C for 2 hours, the moisture content was measured by a weight loss before and after drying.

### (Measurement of Cut Strength of Noodle Strip)

In a polystyrene cup with a draft capacity of 700 ml (manufactured by Atsugi Plastics K.K.), 80 g of a noodle strip sample whose cut strength must be measured was placed and further hot water at 100°C was poured into the polystyrene cup until a draft line. After quickly covered with an aluminum foil, the polystyrene cup was left to stand as it is for 5 minutes. After removing the aluminum foil, the noodle strips were unfastened using chopsticks and the measurement of "time after restoration with hot water" was started. In this case, a stopwatch manufactured by SEIKO S-YARD Co. under the trade name of SEIKO stopwatch S052 was used as means for measuring the time.

After precisely counting 5 minutes using the stopwatch, hot water was quickly separated from the noodle strips and then the cut strength of the noodle strip was measured by a rheometer.

### <Measuring Conditions of Cut Strength>

Rheometer: manufactured by FUDO KOGYO CO. under the trade name of NRM-2010-CW
After placing three noodle strips on a plate, the cut strength was measured using a piano wire and an average was calculated.

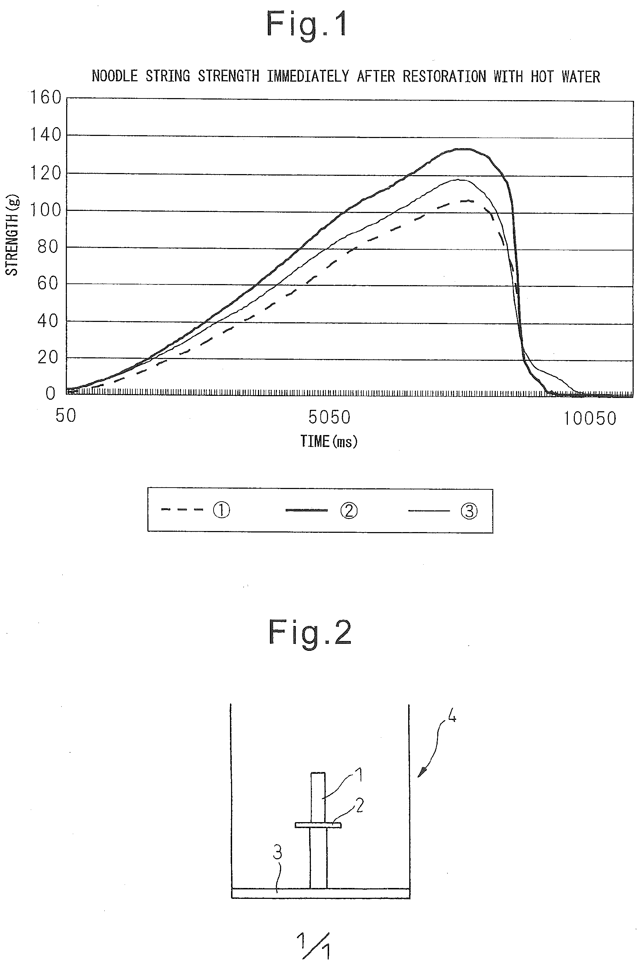

The measurement results obtained above are shown in a graph of Fig. 1.

It will be understood from Fig. 1 that noodle strip with strong stiffness is obtained by a vacuum noodle sheet machine in the sample obtained under the condition (2). It will be also understood that satisfactory restoration with hot water is achieved by further adding powdered fat or oil under the condition (3). As is apparent from the gradient of the graph, the gradient of the curve is large in case of the conditions (2) and (3). That is, it is possible to understand that a surface of the noodle strip has strong springiness and stiffness. The springiness and stiffness correspond to the texture specific to a pasta with density feel.

The cut strength measured above suited for instant noodles was about 120 g. When the cut strength is more than 130 g, the instant noodle had a "hard" food texture. The noodle strip obtained under the condition (1) had a texture with neither density nor springiness since vacuum noodle sheet machine was not used.

The results of a sensory test and noodle-making suitability of the noodles obtained above are shown in Table (1).

**Table (1): Sensory test and noodle-making suitability under the conditions (1) to (3)**

| | Transparency of noodle strip at the time of eating | Heaviness of noodle strip at the time of eating | Restoration with hot water | Dense stiffness specific to pasta | Loosing of steamed noodles in case of generally straight noodles | Loosing at the time of eating in case of generally straight noodles |
|---|---|---|---|---|---|---|
| (1) | 1 | 2 | 3 | 2 | 1 | 1 |
| (2) | 5 | 5 | 1 | 9 | 3 | 2 |
| (3) | 5 | 5 | 5 | 5 | 5 | 5 |
| | Appearance of noodle strip after drying | | | | | |
| (1) | Whitish color with no transparency | | | | | |
| (2) | Slightly yellowish color with transparency specific to pasta | | | | | |
| (3) | Slightly yellowish color with transparency specific to pasta | | | | | |

In the aforementioned table, the stiffness is rated score "5". When the number becomes larger than 5, it shows that the stiffness is too strong.

From Table (1), it will be understood that, when a vacuum noodle sheet machine is used under the condition (3), restoration with hot water can be improved by adding powdered/granular fat or oil without spoiling viscoelasticity, transparency, heaviness and the like, which are features specific to the pasta, of the noodles, and thus a quite well-balanced instant pasta could be obtained. Furthermore, since unfastening of a steamed noodle is satisfactory and unfastening at the time of eating are excellent without waving, a noodle strip of a generally straight noodle of pasta (particularly, spaghetti type) can be reproduced even in instant pasta. Herein, since the noodle obtained under the condition (1) has less stiffness and is powdery, the restoring state was rated score "3".

### Test Example 2 (Comparative)

### <Measurement of Loosing Effect>

The unfastening effect of noodle strip as obtained above under the conditions (1) to (3) was measured by the following method.

The obtained dried noodle was subjected to the measurement by fabricating a device with reference to "Method for Measurement of Unfastening" described in "Foods and Science", Vol. 35, pp.105 (October, 1993). A schematic view of a measuring device is shown in Fig. 2. In this Fig. 2, the reference sign 1 denotes a prop (loosing stick: φ6 mm, 2.2 mm in length), the reference sign 2 denotes a partition plate (φ2.4 mm), the reference sign 3 denotes a bottom plate (145 × 145 mm), and the reference sign 4 denotes a measuring vessel (120 mm in height).

### (Measurement of Unfastening of Noodle Strips)

Hot water (1,500 ml) at 100°C was poured into the box shown in Fig. 2 and the box was left to stand as it is for 90 seconds. After 90 seconds, a shaker was operated at 30 rpm and the time until a noodle mass completely falls from a partition plate was measured.

The measurement results obtained above are shown in Table (2).

**Table (2): Results of measurement of unfastening (seconds)**

| | | | | | | Average (seconds) |
|---|---|---|---|---|---|---|
| (1) | 480 | 480 | 480 | 480 | 480 | 480 |
| (2) | 52 | 63 | 55 | 54 | 66 | 58 |
| (3) | 0 | 0 | 0 | 0 | 0 | 0 |

In the aforementioned table, since unfastening did not arise in case of the condition (1) even when measured for 480 seconds or more, 480 was described as a maximum value.

Since the noodle mass completely fell in case of the condition (3) before 90 seconds have elapsed after pouring hot water, 0 (second) was described.

From Table (2), it will be understood that unfastening of noodle strip is satisfactory in case of the condition (3). It will be understood that the synergistic effect of a vacuum noodle sheet machine and powdered/granular fat or oil exhibits extremely excellent unfastening effect even in generally straight noodle strip.

### Test Example 3

### <Comparison Test of Various Fats or Oils>

In order to show the effects of the invention due to a difference in shape and size of or and oil, a comparison test of various fats or oils by the following methods (i) to (x) was carried out. A raw material of the fat or oil was unified to palm oil (melting point: 50°C) and the effects of the invention due to a difference in size of the fat or oil caused by a difference in production method are shown.

(i) Spray drying method: Spherical Particle diameter of 0.03 mm
(ii) Drum drying method: flaky Particle diameter of 0.1 × 0.5 × 0.1 mm (length × width × thickness)
(iii) Spray cooling method: Spherical Particle diameter 0.1 mm
(iv) Spray cooling method: Spherical Particle diameter 0.15 mm

The test method is based on the following test method B.

### Test Method B (Comparative)

Durum semolina flour (1,000 g) as a powder raw material was respectively mixed with 15 g of each of the aforementioned various fats or oils (i) to (x) and the mixture was kneaded with 320 ml of water to obtain dough. Cylindrical dough was extruded through dies having a diameter 20 mm by applying a pressure to the dough in an extruder or an extrusion molding machine while degassing at vacuum degree of 730 mmHg and cut into a chip shape having a length of 50 mm. After composite noodle-making of a small mass thereof, noodle strip with a cutting edge of 20 (round) and a noodle thickness of 1.50 mm was cut out in a form of generally straight noodle strip by opening a conduit, steamed continuously and then cut into steamed noodle having a noodle weight of 100 g. After spraying 20 ml of a loosing liquid (Fuji Oil Co., Ltd. "SOYAFIBE S", 1.0% aqueous solution), the steamed noodle was air-molded and filled in a mold for drying (φ120 mm). Thereafter, the steamed noodle was dried in a dryer set at a temperature of 80°C and a wind velocity of 4 m/s for 40 minutes to obtain instant pasta having final moisture content of 10%.

Effects of the invention due to a difference in shape and size of fat or oil are shown in Table (3) below.

**Table 3: Effects of invention due to difference in shape and size of fat or oil**

| | Viscoelasticity | Transparency at the time of eating | Heaviness of noodle strip at the time of eating | Restoration with hot water | Stiffness |
|---|---|---|---|---|---|
| (1) | 4 | 5 | 5 | 2 | 9 |
| (2) | 5 | 5 | 5 | 4 | 5 |
| (3) | 5 | 5 | 5 | 5 | 5 |
| (4) | 5 | 5 | 5 | 5 | 5 |

(With respect to the stiffness, score "5" is most excellent. When the number becomes larger than 5, it shows that the stiffness is too strong.)

From the results of Table (3), it will be understood that the size of the powdered fat or oil, which can be used in the present invention, is important. When the powdered fat or oil has a particle diameter of 0.03 mm or less, no effect is obtained. That is, fat or oil having a large particle diameter which can be obtained by a spray cooling method or a drum drying method, specifically spherical fat or oil having a particle diameter of 0.1 mm or more, preferably 0.15 mm or more can solve "poor restoration with hot water" and "too strong stiffness of a noodle strip" without spoiling features of a vacuum noodle sheet machine. As a result, it is possible to reproduce a texture with density feel specific to the pasta.

### Test Example 4

### <Difference due to Melting Point of Fat or Oil>

In order to show the effects of the invention due to a difference in melting point of fat or oil, a comparison test of the following various fats or oils A to I was carried out. With respect to the test method, based on the aforementioned test method B, each (15 g) of the following various fats or oils A to D is used and a comparison test is carried out, respectively.

| | | |
|---|---|---|
| A: Rapeseed oil | Liquid | Particle diameter |
| B: Palm oil | Pasty | Particle diameter |
| C: Palm oil | Spherical | Particle diameter 0.1 mm, Melting point 50°C |
| D: Rapeseed oil | Spherical | Particle diameter 0.1 mm, Melting point 70°C |

**Table 4: Effects of the invention due to difference in melting point of fat or oil**

| | A | B | C | D |
|---|---|---|---|---|
| Condition of restoration with hot water | Poor | Poor | Good | Good |
| Food texture | Poor | Poor | Good | Good |

As is apparent from the results of Table 4, it is impossible to form a cavity in the interior of a noodle strip in case of liquid and pasty fat or oil and thus the effects of the present invention cannot be obtained.

### <Difference due to Amount of Added Fat or oil>

In order to show the effects of the invention regarding the amount of added fat or oil, an addition amount test was carried out in the aforementioned (6). A test method is based on the test B. The powdered fat or oil to be used was a highly hydrogenated palm oil with a melting point of 62°C and an average particle diameter of 0.1 mm.

**Table 5: Effects of invention in additive amount of fat or oil**

| Addition amount | 0.1% | 0.5% | 1.0% | 2.0% | 3.0% | 5.0% | 8.0% | 10% |
|---|---|---|---|---|---|---|---|---|
| Restoration with hot water | Poor | Poor | Ordinary | Good | Good | Good | Good | Good |
| Noodle-making suitability | Good | Good | Good | Good | Good | Good | Ordinary | Poor |
| Strength of noodle after steaming | Good | Good | Good | Good | Good | Ordinary | Ordinary | Poor |

As is apparent from Table 5, regarding the amount of added fat or oil, the effects of the present invention can be obtained by the addition amount of 0.5% or more. However, when the amount of added fat or oil increases, noodle-making suitability and noodle strength after steaming drastically decrease, and thus it becomes difficult to perform continuous production.

### Example 1 (Comparative)

Durum semolina flour (1,000 g, protein 14.5%) as a powder raw material was mixed with 15 g of a powdered spherical palm oil having a melting point of 62°C (spray cooling method) and the mixture was kneaded with 320 ml of water to obtain dough. Cylindrical dough was extruded through dies having a diameter 20 mm by applying a pressure to the dough in an extruder or an extrusion molding machine while degassing at vacuum degree of 730 mmHg and cut into a chip shape having a length of 50 mm. After composite noodle-making of a small mass thereof, noodle strip with a cutting edge of 20 (round) and a noodle thickness of 1.50 mm was cut out as a form of generally straight noodle strip by opening a conduit, steamed continuously and then cut into steamed noodle having a noodle weight of 100 g. After spraying 20 ml of a loosing liquid (Fuji Oil Co., Ltd. "SOYAFIBE S", 1.0% aqueous solution), the steamed noodle was air-molded and filled in a mold for drying (φ120 mm). Thereafter, the steamed noodle was dried in a dryer set at a temperature of 80°C and a wind velocity of 4 m/s for 40 minutes to obtain an instant pasta having final moisture content of 10% (spaghetti type).

### Example 2

Durum semolina flour (1,000 g, protein 14.5%) as a powder raw material was mixed with 15 g of powdered spherical palm oil having a melting point of 62°C (spray cooling method) and the mixture was kneaded with 320 ml of water to obtain dough. Cylindrical dough was extruded through dies having a diameter 20 mm by applying a pressure to the dough in an extruder or an extrusion molding machine while degassing at vacuum degree of 730 mmHg and cut into a chip shape having a length of 50 mm. After composite noodle-making of a small mass thereof, noodle strip with a cutting edge of 20 (round) and a noodle thickness of 1.50 mm was cut out as a form of generally straight noodle strip by opening a conduit, sprayed the noodle strip for one meal with 20 ml of fresh water, steamed continuously and then cut into steamed noodle having a noodle weight of 100 g. After spraying 20 ml of a loosing liquid (Fuji Oil Co., Ltd. "SOYAFIBE S", 1.0% aqueous solution), the steamed noodle was air-molded and filled in a mold for drying (φ120 mm). Thereafter, the steamed noodle was dried in a dryer set at a temperature of 80°C and a wind velocity of 4 m/s for 40 minutes to obtain instant pasta having final moisture content of 10% (spaghetti type).

### Example 3

Durum semolina flour (1,000 g, protein 14.5%) as a powder raw material was mixed with 15 g of powdered spherical palm oil having a melting point of 50°C (drum drying method) and the mixture was kneaded with 320 ml of water to obtain dough. Tabular dough was extruded through dies having a diameter 20 mm by applying a pressure to the dough in an extruder or an extrusion molding machine while degassing at vacuum degree of 730 mmHg and rolled, and then noodle strip with a cutting edge of 20 (round) and a noodle thickness of 1.50 mm was cut out as a form of generally straight noodle strip by opening a conduit, sprayed the noodle strips for one meal with 20 ml of an emulsified liquid (monoglycerin fatty acid ester: 0.5%, 3% aqueous solution of edible fat or oil), steamed continuously and then cut into steamed noodle having a noodle weight of 100 g. After spraying 20 ml of a loosing liquid (Fuji Oil Co., Ltd. "SOYAFIBE S", 1.0% aqueous solution), the steamed noodle was air-molded and filled in a mold for drying (φ120 mm) . Thereafter, the steamed noodle was dried in a dryer set at a temperature of 80°C and a wind velocity of 4 m/s for 40 minutes to obtain instant pasta having final moisture content of 10% (spaghetti type).

### Example 4

Durum semolina flour (1,000 g, protein 14.5%) as a powder raw material was mixed with 15 g of a powdered spherical palm oil having a melting point of 62°C (spray cooling method) and the mixture was kneaded with 320 ml of water to obtain dough. Cylindrical dough was extruded through dies having a diameter 20 mm by applying a pressure to the dough in an extruder or an extrusion molding machine while degassing at vacuum degree of 730 mmHg and cut into a chip shape having a length of 50 mm. After composite noodle-making of a small mass thereof, noodle strip with a cutting edge of 10 (round) and a noodle thickness of 1.10 mm was out as a form of generally straight noodle strip by opening a conduit, sprayed the noodle strips for one meal with 20 ml of fresh water, steamed continuously and then cut into steamed noodle having a noodle weight of 100 g. After spraying 20 ml of a loosing liquid (Fuji Oil Co., Ltd. "SOYAFIBE S", 1.0% aqueous solution), the steamed noodle was air-molded and filled in a mold for drying (φ120 mm). Thereafter, the steamed noodle was dried in a dryer set at a temperature of 80°C and a wind velocity of 4 m/s for 40 minutes to obtain instant pasta having final moisture content of 10% (fettuccine type).

### Comparative Example 1

The conditions were common to those of Example 1, except that the vacuum noodle sheet machine used in Example 1 was not used and also 15 g of the powdered spherical palm oil having a melting point of 62°C as the blending component (spray cooling method, 0.15 mm) was not used.

### Comparative Example 2

The conditions were common to those of Example 2, except that the vacuum noodle sheet machine used in Example 2 was not used and also 15 g of the powdered spherical palm oil having a melting point of 62°C as the blending component (spray cooling method, 0.15 mm) was not used.

### Comparative Example 3

The conditions were common to those of Example 3, except that 15 g of the powdered spherical palm oil having a melting point of 50°C as the blending component of Example 3 (drum drying method) was not used.

Table (6) shows the aforementioned evaluation results of Examples 1 to 4.

The evaluation was carried out by the same method of restoration with hot water as in the paragraph "0064"

### (Measurement of Cut Strength of Noodle strip).

**Table 6: Evaluation of Examples**

| | Viscoelasticity and stiffness with dense feel peculiar to pasta | Restoration with hot water | Loosing after steaming in case of generally straight noodles | Loosing at the time of eating in case of generally straight noodles |
|---|---|---|---|---|
| Example 1 | 5 | 4 | 5 | 5 |
| Example 2 | 5 | 5 | 5 | 5 |
| Example 3 | 5 | 5 | 5 | 5 |
| Example 4 | 5 | 5 | 5 | 5 |
| Comparative Example 1 | 1 | 1 | 2 | 1 |
| Comparative Example 2 | 1 | 2 | 2 | 1 |
| Comparative Example 3 | 4 | 1 | 3 | 2 |

As mentioned above, according to the present invention, genuine instant pasta, which could not have been achieved heretofore, and a method for producing the same are provided. That is, it becomes possible to make genuine instant pasta which can be eaten only by pouring hot water, even when durum wheat flour is used as a main raw material, and also a step of applying a pressure to a noodle strip is carried out, like genuine pasta.

### Reference Signs List

1. Prop (loosing stick: φ6 mm, 2.2 mm in length)
2. Partition plate (φ2.4 mm)
3. Bottom plate (measuring 145 × 145 mm)
4. Measuring vessel (120 mm in height)

## Claims

1. A method for producing instant dried noodle, which comprises:
applying a pressure to dough prepared from a main raw noodle material and solid fat or oil under reduced pressure using an extrusion molding machine thereby forming a small mass or a plate shape of the dough;
making noodle strips from the small mass or plate;
allowing an aqueous solution to adhere onto the noodle strips before a steaming step;
gelatinizing the noodle strips using steam from a steamer; and then
drying the noodle strips with hot air; wherein a main raw material of the instant noodle is 100% durum wheat flour for pasta; and
the instant dried noodle is restored by adding hot water.

2. The method for producing instant dried noodle according to claim 1, wherein the noodle strip of the instant noodle has a generally straight shape with less wave.

3. The method for producing instant dried noodle according to claim 1 or 2, wherein the solid fat or oil has a powdered/granular shape having a particle diameter of 0.1 mm or more.

4. The method for producing instant dried noodle according to any one of claim 1 to 3, wherein the powdered/granular fat or oil is produced by a spray cooling method or a drum drying method.

5. The method for producing instant dried noodle according to any one of claims 1 to 4, wherein the solid fat or oil has a melting point of 50°C to 70°C.

6. The method for producing instant dried noodle according to any one of claims 1 to 5, wherein an amount of the added solid fat or oil is from 0.5 to 10% based on the wheat flour.

7. The method for producing instant dried noodle according to any one of claims 1 to 6, wherein hot air used for drying the instant noodle is hot air at a temperature within a range from 60°C to 100°C alone or a combination of different temperatures within this range.

8. The method for producing instant dried noodle according to any one of claims 1 to 7, further comprising adhering an emulsified fat or oil, or an emulsifying agent onto the noodle strips before the drying step.

## Patentansprüche

1. Verfahren zur Herstellung von getrockneter Instantnudel, umfassend:
Ausüben von Druck auf Teig, der aus einem rohen Hauptnudelmaterial und festem Fett oder Öl unter vermindertem Druck hergestellt wurde, unter Verwendung einer Extrusionsformmaschine, wodurch eine kleine Masse oder eine Plattenform des Teigs gebildet wird;
Herstellen von Nudelstreifen aus der kleinen Masse oder der Platte;
Anhaftenlassen einer wässrigen Lösung an die Nudelstreifen vor einem Dampfschritt;
Gelatinieren der Nudelstreifen unter Verwendung von Dampf aus einem Dampfgarer; und dann
Trocknen der Nudelstreifen mit heißer Luft;
wobei ein Hauptrohstoff der Instantnudel 100% Hartweizenmehl für Pasta ist; und wobei die getrocknete Instantnudel durch Zugabe von heißem Wasser wiederhergestellt wird.

2. Verfahren zur Herstellung von getrockneter Instantnudel nach Anspruch 1, wobei der Nudelstreifen der Instantnudel eine im Allgemeinen gerade Form mit wenigen Wellen aufweist.

3. Verfahren zur Herstellung von getrockneter Instantnudel nach Anspruch 1 oder 2, wobei das feste Fett oder Öl eine pulverförmige / körnige Form mit einem Teilchendurchmesser von 0,1 mm oder mehr aufweist.

4. Verfahren zur Herstellung von getrockneter Instantnudel nach einem der Ansprüche 1 bis 3, wobei das pulverförmige / körnige Fett oder Öl durch ein Sprühkühlverfahren oder ein Trommeltrocknungsverfahren hergestellt wird.

5. Verfahren zur Herstellung von getrockneter Instantnudel nach einem der Ansprüche 1 bis 4, wobei das feste Fett oder Öl einen Schmelzpunkt von 50°C bis 70°C aufweist.

6. Verfahren zur Herstellung von getrockneter Instantnudel nach einem der Ansprüche 1 bis 5, wobei eine Menge des zugegebenen festen Fettes oder Öls 0,5 bis 10%, bezogen auf das Weizenmehl, beträgt.

7. Verfahren zur Herstellung von getrockneter Instantnudel nach einem der Ansprüche 1 bis 6, wobei die heiße Luft, die zum Trocknen der Instantnudel verwendet wird, heiße Luft mit einer einzigen Temperatur im Bereich von 60°C bis 100°C oder einer Kombination von verschiedenen Temperaturen innerhalb dieses Bereichs ist.

8. Verfahren zur Herstellung von getrockneter Instantnudel nach einem der Ansprüche 1 bis 7, ferner umfassend das Anhaften eines emulgierten Fettes oder Öls oder eines Emulgators vor dem Trocknungsschritt an die Nudelstreifen.

## Revendications

1. Procédé pour produire des nouilles séchées instantanées, qui comprend :
l'application d'une pression à une pâte préparée à partir d'une matière première principale de nouilles et d'une huile ou graisse solide sous pression réduite, utilisant une machine de moulage par extrusion, ce qui forme ainsi une petite masse ou une forme en plaque de la pâte ;
la formation de rubans de nouilles à partir de la petite masse ou plaque ;
le fait de laisser une solution aqueuse adhérer sur les rubans de nouilles avant une étape d'étuvage ;
la gélatinisation des rubans de nouilles, utilisant de la vapeur provenant d'une marmite à vapeur ; et ensuite
le séchage à l'air chaud des rubans de nouilles ;
où une matière première principale des nouilles instantanées est 100 % de farine de blé dur pour pâtes ; et
les nouilles séchées instantanées sont reconstituées par addition d'eau chaude.

2. Procédé pour produire des nouilles séchées instantanées selon la revendication 1, où le ruban de nouilles des nouilles instantanées a une forme globalement droite avec moins d'ondulations.

3. Procédé pour produire des nouilles séchées instantanées selon la revendication 1 ou 2, où l'huile ou graisse solide a une forme pulvérulente/granulaire ayant une granulométrie de 0,1 mm ou plus.

4. Procédé pour produire des nouilles séchées instantanées selon l'une quelconque des revendications 1 à 3, où l'huile ou graisse pulvérulente/granulaire est produite par un procédé de refroidissement par pulvérisation ou un procédé de séchage en tambour.

5. Procédé pour produire des nouilles séchées instantanées selon l'une quelconque des revendications 1 à 4, où l'huile ou graisse solide a un point de fusion de 50°C à 70°C.

6. Procédé pour produire des nouilles séchées instantanées selon l'une quelconque des revendications 1 à 5, où la quantité de l'huile ou graisse solide ajoutée est de 0,5 à 10 % par rapport à la farine de blé.

7. Procédé pour produire des nouilles séchées instantanées selon l'une quelconque des revendications 1 à 6, dans lequel l'air chaud utilisé pour le séchage des nouilles instantanées est de l'air chaud à une seule température comprise dans la plage allant de 60°C à 100°C ou une combinaison de différentes températures comprises dans cette plage.

8. Procédé pour produire des nouilles séchées instantanées selon l'une quelconque des revendications 1 à 7, comprenant en outre l'adhésion d'une huile ou graisse émulsionnée, ou d'un agent émulsionnant sur les rubans de nouilles avant l'étape de séchage.
